# FASCICULE DE BREVET EUROPEEN

(11) **EP 3 636 058 B1**
(45) Date de publication et mention de la délivrance du brevet: **23.08.2023**
(21) Numéro de dépôt: 19202246.5
(22) Date de dépôt: 09.10.2019
(51) Int. Cl.: A01B 29/04, A01B 71/08

(54) **ROULEAU AGRICOLE AUTONETTOYANT**
SELBSTREINIGENDE LANDWIRTSCHAFTLICHE WALZE
SELF-CLEANING AGRICULTURAL ROLLER

(30) Priorité: 12.10.2018 FR 1859504
(43) Date de publication de la demande: 15.04.2020
(73) Titulaire: OTICO, 77650 Chalmaison (FR)
(72) Inventeur: PHELY, Olivier, 77520 Thénisy (FR)
(74) Mandataire: Cabinet Netter

(56) Documents cités:
- EP-A1- 0 878 328
- EP-A1- 2 730 155
- WO-A1-2018/172461
- DE-A1- 1 680 531
- FR-A1- 2 694 863
- FR-A1- 2 776 239
- FR-A1- 2 784 331

## Description

L'invention concerne un rouleau agricole du type comprenant un support tubulaire et au moins une première série de pneumatiques, enfilés sur le support tubulaire, chaque pneumatique de cette première série présentant une enveloppe respective.

Un tel rouleau est connu par exemple de FR 2 763 279 A1, au nom de la Demanderesse, document qui décrit en détail des pneumatiques à usage avec ce rouleau. Ces pneumatiques présentent une section radiale agencée de manière que la portion de roulement, à profil en dôme, ne s'affaisse pas trop sous l'effort, tout en possédant une souplesse suffisante pour permettre aux pneumatiques de se déformer.

Ce type de rouleau est utilisable pour travailler les champs en sillons. Il peut s'utiliser avec un semoir, pour former dans la terre des sillons destinés à recevoir des graines ou semences. Il peut également être utilisé pour rappuyer le sol après semis. Il peut s'utiliser seul, ou en combinaison d'autres outils, comme un semoir ou des outils de préparation du sol.

Les rouleaux de ce type sont classiquement équipés de pneumatiques spéciaux, dont la forme est adaptée à la fonction du rouleau dans le champ. Certains de ces pneumatiques sont de type semi-creux. Les pneumatiques semi-creux, aussi appelés bandages semi-creux, sont des pneumatiques dont l'enveloppe n'est pas gonflée, ni gonflable. De tels rouleaux sont divulgués dans les publications FR2776239A1 et EP2730155A1.

Ce type de pneumatique est satisfaisant. Néanmoins, dans certaines conditions de travail, le terrain collant, la terre humide ou la boue tendent à souiller les équipements et réduire leur efficacité. Pour nettoyer les pneumatiques en cours d'utilisation, il est connu d'utiliser des grattoirs ou racloirs métalliques. Les grattoirs métalliques sont de forme complémentaire de celle des pneumatiques et solidaires du châssis. Ils s'intercalent entre les pneumatiques du rouleau.

La Demanderesse a constaté que la présence de ces grattoirs augmentait les risques de détérioration et de perforation des pneumatiques. En cas de contact accidentel entre les grattoirs et les pneumatiques, ou en présence d'un caillou par exemple, les pneumatiques peuvent être détériorés. La Demanderesse a donc cherché à réduire ces risques.

La Demanderesse a alors conçu des pneumatiques de type semi-creux dont les propriétés d'auto-nettoyage sont telles qu'il devient possible de se passer de grattoirs. Certains de ces pneumatiques présentent un profil agencé de manière que la bande de roulement préserve sa forme fonctionnelle en travail, tandis que les flancs se déforment de manière importante. En travail, la bande de roulement peut, par exemple, se déplacer radialement, lorsque le pneumatique s'écrase sous le poids de la machine agricole. Ce déplacement radial de la bande de roulement ou la déformation des flancs provoque le décollement de la terre, sans nuire à l'efficacité du rouleau.

Les pneumatiques de ce type donnent globalement satisfaction. La Demanderesse a cependant cherché à aller plus loin encore, en s'intéressant au nettoyage du rouleau dans son ensemble, et non plus seulement au nettoyage des pneumatiques qui l'équipent.

Il se trouve en effet qu'entre les pneumatiques du rouleau, de la terre peut s'accumuler, même lorsque ces pneumatiques présentent de bonnes propriétés autonettoyantes. Pour éviter une telle accumulation, on installe classiquement des racloirs qui agissent entre les pneumatiques. Toutefois, l'installation de tels racloirs complexifie la conception des rouleaux, leur fabrication et leur entretien.

L'invention vient améliorer cette situation.

On propose un rouleau agricole, comme défini dans la revendication 1, du type comprenant un support tubulaire et une série de pneumatiques montée sur le support. Chaque pneumatique de la série présentant une enveloppe respective non gonflée. Le rouleau comprend en outre une série de bandages montée sur le support de manière intercalée dans la série de pneumatiques. Chaque bandage présente une enveloppe respective déformable. Les bandages sont plus petits que les pneumatiques tandis que leur enveloppe est plus étroite.

Le rouleau proposé présente une performance accrue en ce qui concerne son nettoyage en ce que l'espace entre deux pneumatiques est partiellement comblé par un bandage autonettoyant. Ce bandage empêche la terre de s'accumuler entre deux pneumatiques mutuellement adjacents.

D'autres caractéristiques et avantages de l'invention apparaîtront à l'examen de la description détaillée ci-après, et des dessins annexés sur lesquels :
- la figure 1 montre un rouleau agricole selon l'invention vu en perspective isométrique ;
- la figure 2 montre le rouleau de la figure 1, en vue de face ;
- la figure 3 montre le rouleau de la figure 2 en coupe selon une ligne III-III ;
- la figure 4 montre un détail IV du rouleau de la figure 3 ;
- la figure 5 montre une portion du rouleau de la figure 1, vue en éclaté ;
- la figure 6 montre un détail VI du rouleau de la figure 4 ;
- la figure 7 montre une partie d'une variante de réalisation du rouleau des figures 1 à 6, vue en coupe longitudinale ;
- la figure 8 montre une portion du rouleau de la figure 7, vue en éclaté ;
- les figures 9 et 10 sont respectivement analogues aux figures 7 et 8, et montrent une autre variante de réalisation du rouleau des figures 1 à 6 ;
- les figures 11 et 12 sont respectivement analogues aux figures 7 et 8, et montrent encore une autre variante de réalisation du rouleau des figures 1 à 6 ;
- les figures 13 et 14 sont respectivement analogues aux figures 7 et 8, et montrent une autre variante de réalisation encore du rouleau des figures 1 à 6 ;
- les figures 15 et 16 sont respectivement analogues aux figures 7 et 8, et montrent une autre variante de réalisation encore du rouleau des figures 1 à 6 ;
- les figures 17 et 18 sont respectivement analogues aux figures 7 et 8, et montrent une autre variante de réalisation encore du rouleau des figures 1 à 6 ;
- les figures 19 et 20 sont respectivement analogues aux figures 7 et 8, et montrent une autre variante de réalisation encore du rouleau des figures 1 à 6 ; et

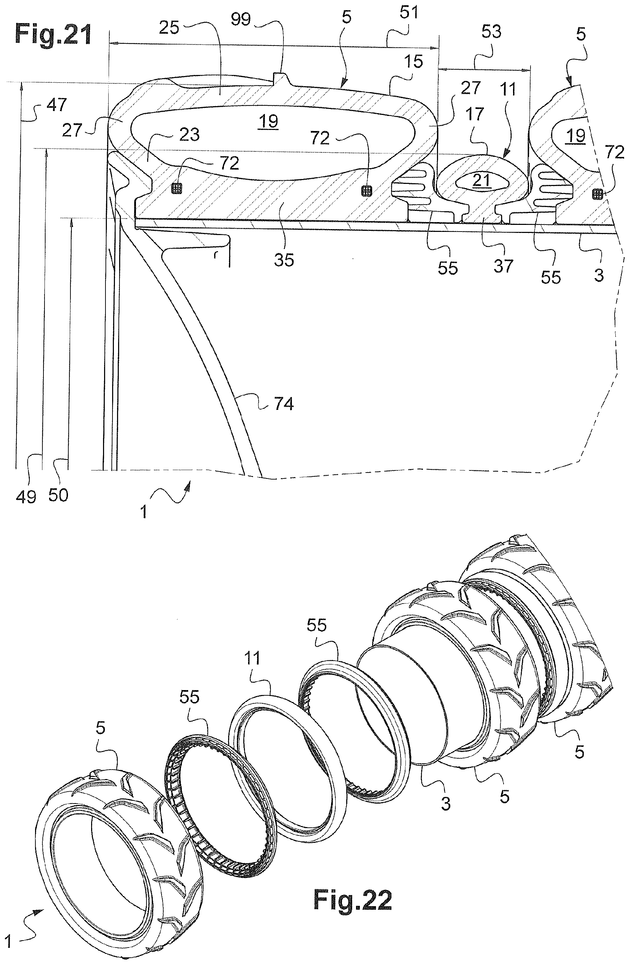

- les figures 21 et 22 sont respectivement analogues aux figures 7 et 8, et montrent une autre variante de réalisation encore du rouleau des figures 1 à 6 ;
- les figures 23 et 24 sont respectivement analogues aux figures 7 et 8, et montrent une autre variante de réalisation encore du rouleau des figures 1 à 6 ;
- la figure 25 est analogue à la figure 23 et montre un développement de la variante de réalisation des figures 23 et 24 ;
- les figures 26 et 27 sont analogues à la figure 23 et montrent un autre développement encore de la variante de réalisation des figures 23 et 24.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

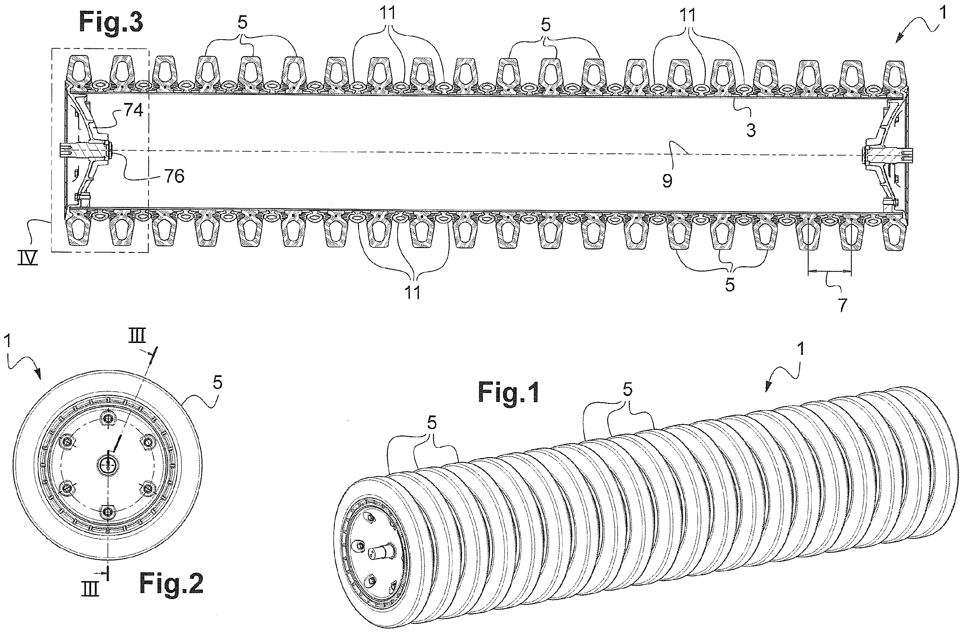

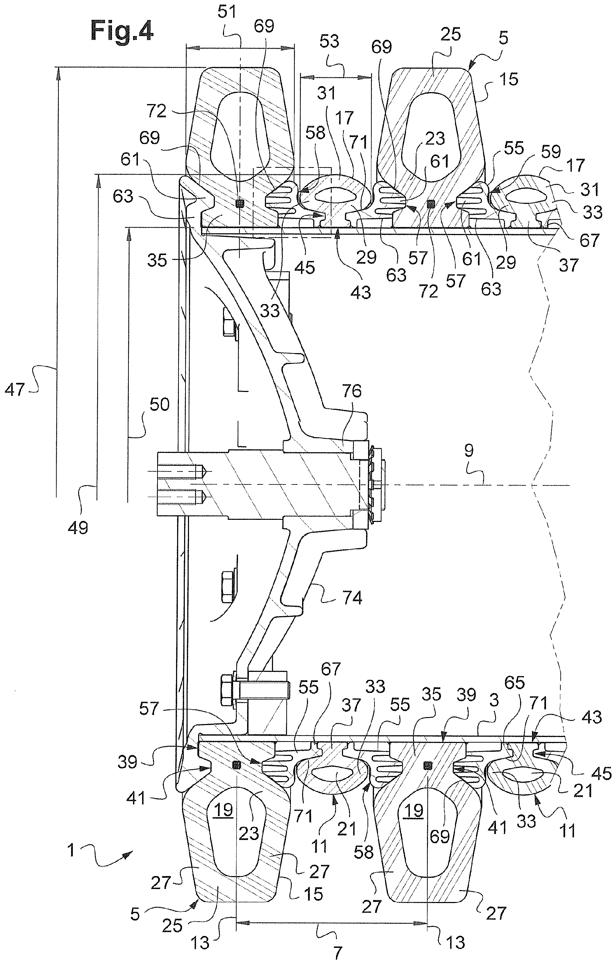

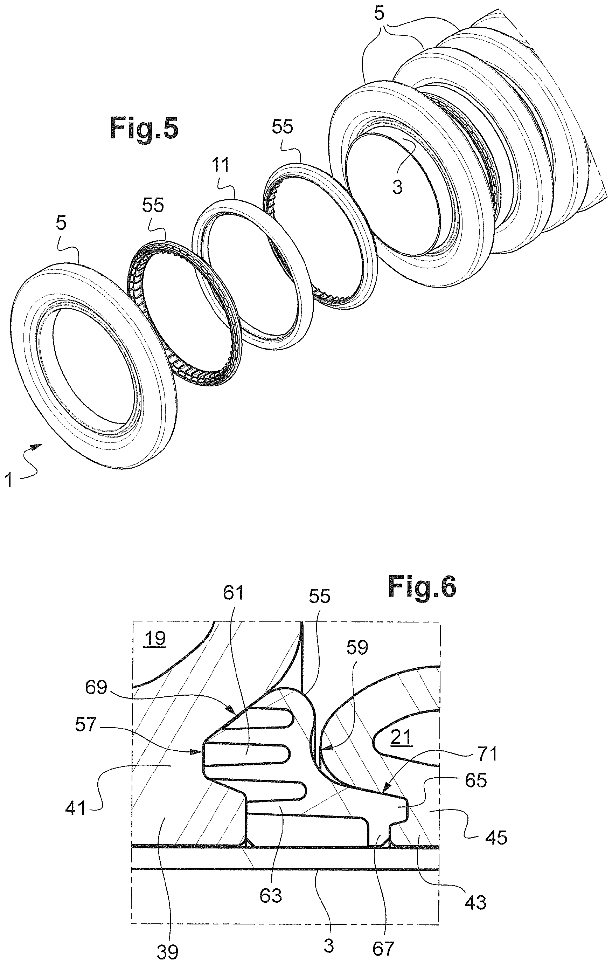

On fait référence aux figures 1 à 6.

Un élément de machine agricole comporte un rouleau 1, ici de type sillonneur. Le rouleau 1 comprend un support tubulaire 3, généralement cylindrique, et une pluralité de pneumatiques d'un premier type, ou premiers pneumatiques 5, analogues les uns aux autres. Les premiers pneumatiques 5 sont enfilés autour du support tubulaire 3 de manière alignée les uns avec les autres. Les premiers pneumatiques 5 sont alignés selon la direction longitudinale du support 3. Les premiers pneumatiques 5 sont répartis sur la longueur du support 3 selon un pas constant 7.

Le rouleau 1 est destiné à être monté à rotation autour de l'axe 9 du support 3, typiquement sur le châssis d'une machine agricole (non représentée).

Le déplacement du châssis en question entraîne, par réaction des premiers pneumatiques 5 sur le sol, la rotation du rouleau 1. Les premiers pneumatiques 5 travaillent le sol en des sillons parallèles entre eux. Ici, la forme des premiers pneumatiques 5 leur permet d'être utilisés pour former ces sillons. Les premiers pneumatiques 5 sont les éléments actifs du rouleau 1, en ce que ce sont eux qui servent majoritairement au travail du sol.

Le pas 7 correspond à ce que l'on appelle l'entre-rang dans la technique, c'est-à-dire l'écartement entre deux sillons adjacents dans le champ.

Le rouleau 1 comprend en outre une pluralité de pneumatiques d'un second type, ou second pneumatiques 11, analogues les uns aux autres. Les seconds pneumatiques 11 sont enfilés autour du support 3 de manière alignée les uns avec les autres. Les seconds pneumatiques 11 sont alignés selon la direction longitudinale du support 3.

Les seconds pneumatiques 11 sont intercalés entre les premiers pneumatiques 5. Un second pneumatique 11 est intercalé à chaque fois entre deux premiers pneumatiques 5 voisins. Les seconds pneumatiques 11 sont régulièrement répartis le long du support 3, selon un pas identique au pas 7 des premiers pneumatique 5.

Les premiers pneumatiques 5 et les seconds pneumatiques 11 présentent une forme de révolution autour d'un axe central respectif. Les premiers pneumatiques 5 et les seconds pneumatiques 11 se montent sur le support 3 de manière centrée, c'est-à-dire que l'axe central de ces pneumatiques coïncide sensiblement avec l'axe 9 du support 3.

Sur les figures, les premiers pneumatiques 5 et les seconds pneumatiques 11 sont montrés tels qu'ils se trouvent en l'absence de sollicitation extérieure (libres de contrainte extérieure).

Les premiers pneumatiques 5 et les second pneumatiques 11 présentent chacun un plan médian 13 orthogonal à leur axe central. Les premiers pneumatiques 5 et les seconds pneumatiques 11 présentent une allure généralement symétrique par rapport à leur plan médian 13.

Les premiers pneumatiques 5 et les second pneumatiques 11 comprennent respectivement une enveloppe d'un premier type, ou première enveloppe 15, et une enveloppe d'un second type, ou seconde enveloppe 17.

Les premières enveloppes 15 et les secondes enveloppes 17 sont chacune constituées d'un bandage, aussi appelé peau. Les premières enveloppes 15 et les secondes enveloppes 17 sont chacune venues de matière et constituées d'un matériau souple, typiquement un caoutchouc naturel, un ou plusieurs élastomères, tels que le polyuréthane par exemple, ou encore un mélange de caoutchouc naturel et d'élastomère. Par exemple, le matériau souple présente une dureté Shore A comprise entre 50 et 70. Le matériau des premières enveloppes 15 peut différer de celui des secondes enveloppes 17.

Les premières enveloppes 15 et les secondes enveloppes 17 présentent chacune une allure de révolution autour de l'axe central et occupent respectivement la circonférence des premiers pneumatiques 5 et des seconds pneumatiques 11. Les premières enveloppes 15 et les secondes enveloppes 17 délimitent chacune respectivement une première chambre 19 et une seconde chambre 21. Les premières chambres 19 et les secondes chambres 21 communiquent chacune avec l'extérieur par au moins une ouverture (non représentée). Les premières chambres 19 et les secondes chambres 21 sont non gonflables, ce qui rend les premières enveloppes 15 et les secondes enveloppes 17 déformables. Les premiers pneumatiques 5 et les seconds pneumatiques 11 sont de type semi-creux. Les premières enveloppes 15 et les secondes enveloppes 17 admettent le plan médian 13 des premiers pneumatiques 5 et des seconds pneumatiques 11 comme plan médian et de symétrie.

Les premières enveloppes 15 et les secondes enveloppes 17 sont généralement annulaires. Les premières enveloppes 15 comportent chacune une portion périphérique intérieure 23 et une portion périphérique extérieure 25, radialement opposée à la portion intérieure 23. Les premières enveloppes 15 comportent en outre chacune deux portions latérales 27, mutuellement opposées de façon axiale, qui relient chacune la portion intérieure 23 à la portion extérieure 25. La portion extérieure 25 des premières enveloppes 15 constitue la bande de roulement des premiers pneumatiques 5. Les portions latérales 27 peuvent être désignées flancs.

Les secondes enveloppes 17 comportent chacune une portion périphérique intérieure 29 et une portion périphérique extérieure 31, radialement opposée à la portion intérieure 29. Les secondes enveloppes 17 comportent en outre chacune deux portions latérales 33, mutuellement opposées de façon axiale, qui relient chacune la portion intérieure 29 à la portion extérieure 31. La portion extérieure 31 des secondes enveloppes 17 constitue la bande de roulement des seconds pneumatiques 11, les portions latérales 33 les flancs.

Les premiers pneumatiques 5 et les seconds pneumatiques 11 comprennent respectivement une partie formant talon d'un premier type, ou premier talon 35, et une partie formant talon d'un second type, ou second talon 37. Les premiers talons 35 et les seconds talons 37 se raccordent respectivement à la paroi intérieure 23 des premières enveloppes 15 et la paroi intérieure 29 des secondes enveloppes 17. Les premiers talons 35 et les seconds talons 37 font saillie radialement vers l'intérieur respectivement des premières enveloppes 15 et des secondes enveloppes 17. Les premiers talons 35 et les seconds talons 37 sont venus de matière, respectivement avec les premières enveloppes 15 et les secondes enveloppes 17.

Les premiers talons 35 comprennent chacun une portion périphérique évasée, ou embase 39, et une portion intermédiaire étroite, ou col 41, qui raccorde l'embase 39 à la première enveloppe 15. De manière analogue, les seconds talons 37 comprennent chacun une embase 43 reliée à la seconde enveloppe 17 par un col 45. Les embases 39 des premiers talons 35 et les embases 43 des second talons 37 constituent des portions périphériques intérieures des premiers pneumatiques 5 et des seconds pneumatiques 11, respectivement.

Les premiers talons 35 et les seconds talons 37 présentent ici des profils en forme générale de T, dont les branches forment les embases 39 et 43, et le corps les cols 41 et 45.

Ici, les premiers pneumatiques 5 et les seconds pneumatiques 11 sont montés sur le support 3 par l'intermédiaire des embases 39 et 43 des premiers talons 35 et des seconds talon 37, respectivement.

Les seconds pneumatiques 11 sont plus petits que les premiers pneumatiques 5. Les premiers pneumatiques 5 présentent un diamètre extérieur 47, ou diamètre OD1, qui est sensiblement supérieur à un diamètre extérieur 49, ou diamètre OD2, des seconds pneumatiques 11. En particulier, le diamètre OD2 est compris entre 60 et 90 pour cent du diamètre OD1. Les premiers pneumatiques 5 et les seconds pneumatiques 11 présentent un diamètre intérieur 50, ou diamètre ID, qui correspond ici au diamètre extérieur du support 3.

La ligne I du tableau A rassemble des valeurs dimensionnelles à usage notamment pour la réalisation de premiers pneumatiques 5 et seconds pneumatiques 11 conformes aux figures 1 à 6. La ligne correspondante du tableau B fait apparaître un diamètre OD2 inférieur de 26 pour cent au diamètre OD1.

En outre, les seconds pneumatiques 11 présentent une seconde enveloppe 17 qui plus étroite que la première enveloppe 15 des premiers pneumatiques 5. Les premières enveloppes 15 présentent une largeur 51, ou largeur W1, qui est supérieure à une largeur 53 de la seconde enveloppe 17, ou largeur W2. La largeur d'une enveloppe s'entend ici comme la plus grande dimension de cette enveloppe dans la direction axiale, dans un état libre de sollicitation. La largeur W2 des secondes enveloppes 17 est inférieure à 80 pour cent de la largeur W1 des premières enveloppes 15. Les dimensions de la ligne I du tableau A correspondent à une largeur W2 des secondes enveloppes 17 qui est inférieure de 34 pour cent à la largeur W1 des premières enveloppes 15 (ligne correspondante du tableau B).

La largeur W1 des premières enveloppes 15 est principalement déterminée par la fonction agricole des premiers pneumatiques 5, ici la formation de sillons. La pas P des premiers pneumatiques 5 est également déterminé par la fonction agricole des premiers pneumatiques 5, ici l'entre-rang, ou distance séparant deux sillons adjacents l'un de l'autre.

La largeur W2 des secondes enveloppe 17 est déterminée de manière que leur déformation agisse contre toute accumulation de terre entre les premiers pneumatiques 5. La largeur W2 des secondes enveloppes 17 est supérieure à la différence entre le pas P des premiers pneumatiques 5 et la largeur W1 des premières enveloppes 15, ou au moins supérieure à 80 pour cent de cette différence. Dans l'exemple correspondant à la ligne I, la largeur W2 des secondes enveloppes 17 correspond à 86 pour cent de la différence en question.

La largeur W2 des secondes enveloppes 17 correspond à une position diamétrale de ces enveloppes qui est inférieure à la position diamétrale correspondant à la largeur W1 des première enveloppes 15. Ici, la largeur W2 des secondes enveloppes 17 correspond à l'écartement des portions latérales 33 sensiblement au niveau du col 41 des premiers pneumatiques 5. La portion extérieure 31 des secondes enveloppes 17 se trouve sur un diamètre inférieur au plus petit diamètre des portions latérales 27 des premières enveloppes 15. En se déformant, les premiers pneumatiques 5 pourraient dans certains cas au moins venir contacter les seconds pneumatiques 11.

Le rouleau 1 comprend encore une pluralité de flasques 55 analogues les uns aux autres. Les flasques 55 sont enfilés autour du support tubulaire 3 de manière alignée les uns avec les autres. Les flasques 55 sont alignés selon la direction longitudinale du support 3. Les flasques 55 sont répartis sur la longueur du support 3, de manière intercalée entre les premiers pneumatiques 5 et les seconds pneumatiques 11. Un flasque 55 est intercalé entre chaque premier pneumatique 5 et un second pneumatique 11 adjacent.

Chaque flasque 55 présente une première grande face 57 et une seconde grande face 59 axialement opposée. La première face 57 est agencée en partie au moins de manière à maintenir les premiers talons 35 par coopération de forme. Chaque première face 59 présente une zone en couronne dont le profil est complémentaire d'une partie au moins du profil des premiers talons 35. En particulier, le profil de cette zone en couronne comprend une portion axialement en saillie 61, conformée pour s'engager dans le col 41 des premiers pneumatiques 5, et une portion axialement en retrait 63, radialement adjacente à la portion en saillie 61, dans laquelle peut s'engager l'embase 39 des premiers talons 35.

La seconde face 59 est conformée vis-à-vis des seconds pneumatiques 11 de manière homologue de la première face 57 et des premiers pneumatiques 5. Chaque seconde face 59 comprend une zone en couronne dont le profil est complémentaire d'au moins une portion du profil des seconds talons 37, ici avec une portion en saillie 65 et une portion en retrait 67 qui coopèrent par leur forme respectivement avec le col 45 et l'embase 43 des seconds pneumatiques 11.

Les flasques 55 sont organisés par paires sur le support 3. Dans chaque paire, l'un des flasques 55 est enfilé sur le support 3 par sa seconde face 59 tandis que l'autre est enfilé sur le support 3 par sa première face 57. Chaque paire de flasque 55 contribue à maintenir un premier pneumatique 5 respectif sur le support 3. En outre, chacun des flasques 55 d'une paire contribue à maintenir sur ce support 3 un second pneumatique 11 adjacent, conjointement à un flasque 55 d'une paire adjacente. Les flaques 55 agissent en outre vis-à-vis des premiers pneumatiques 5 et seconds pneumatiques 11 du rouleau 1 comme des entretoises. Axialement, les premiers pneumatiques 5 et les second pneumatiques 11 sont en appui mutuel par l'intermédiaire des flasques 55. Les flasques 55 maintiennent l'écartement entre les premiers pneumatiques 5 d'une part et entre les premiers pneumatiques 5 et les seconds pneumatiques 11 d'autre part.

Les flasques 55 comprennent chacun au moins une surface généralement annulaire formant un demi-siège périphérique pour les premiers pneumatiques 5, ou premier demi-siège 69. Les premiers demi-sièges 69 sont conformés pour recevoir en partie au moins la portion intérieure 23 des premières enveloppes 15. Les premiers demi-sièges 69 sont agencés sur la première face 57 des flasques 55. Ces premiers demi-sièges 69 sont radialement adjacents aux portions en saillie 61 des premières faces 57 des flasques 55. Chaque paire de flasques 55 porte ainsi une surface de siège, ou assise, d'un premier type, autour de laquelle s'engage un premier pneumatique 5 respectif.

Ici, les flasques 55 comprennent en outre chacun au moins une surface généralement annulaire formant un demi-siège périphérique pour les seconds pneumatiques 11, ou second demi-siège 71. Les seconds demi-sièges 71 sont conformés pour recevoir en partie au moins la portion intérieure 29 des secondes enveloppes 17. Les seconds demi-sièges 71 sont agencés sur la seconde face 59 des flasques 55. Ces seconds demi-sièges 71 sont radialement adjacents aux portions en saillie 65 des secondes faces 59 des flasques 55. Deux flasques 55 voisins de deux paires adjacentes portent ainsi une surface de siège d'un second type, autour de laquelle s'engage un second pneumatique 11 respectif.

Les flasques 55 sont rigides. Les flasques 55 sont par exemple en matière plastique.

Les secondes enveloppes 17 délimitent chacune une cavité creuse, constituée de la seconde chambre 21, située entre deux premières enveloppes 15 plus grandes. Ces secondes enveloppes 17 reposent chacune sur un siège respectif intermédiaire, entre les sièges respectifs de premières enveloppes 15 adjacentes.

Le rouleau 1 est équipé de pneumatiques que l'on peut qualifier d'étagés, du fait que ce rouleau 1 combine de premiers pneumatiques 5 et de seconds pneumatiques 11, et que les premiers pneumatiques 5 ont un diamètre extérieur 47 sensiblement supérieur au diamètre extérieur 49 des seconds pneumatiques 11.

L'utilisation de pneumatiques étagés améliore l'auto-nettoyage du rouleau 1 dans son ensemble, du fait que :
- les premiers pneumatiques 5 sont autonettoyants ;
- l'espace intercalaire entre les premiers pneumatiques 5 est occupé par de seconds pneumatiques 11, eux aussi autonettoyants.

On peut ainsi supprimer tout dispositif de nettoyage supplémentaire, en particulier analogue à la rampe de grattoirs qui est classiquement montée sur les rouleaux agricoles.

Les portions latérales 27 des premières enveloppes 15, par l'intermédiaire desquelles les premiers pneumatiques 5 pénètrent dans le sol, ne sont pas contraintes axialement (latéralement). Ces portions latérales 27 sont libres de s'écraser en partie au moins ou de se déplacer, en déformant la première enveloppe 15. Cette déformation ou ce déplacement nettoie les premiers pneumatiques 5 ou, du moins, y empêche l'accumulation de terre.

À un diamètre inférieur, les seconds pneumatiques 11 comprennent une seconde enveloppe 15 entourant une seconde chambre 21. Les secondes chambres 21 permettent aux secondes enveloppes 17 de se déformer, en évitant le colmatage de terre entre les premiers pneumatiques 5. Les seconds pneumatiques 11 sont également libres de se déformer axialement (latéralement) au voisinage de leur bande de roulement afin que de la terre ne s'y accumule pas.

Ici, la portion intérieure 23 des premières enveloppes 15 présente un profil convexe. Cette portion intérieure 23 repose sur un premier siège constitué des premiers demi-sièges 69 de deux flasques 55 adjacents. La portion extérieure 25 de ces premières enveloppes 15 présente un profil rectiligne, qui s'étend parallèlement à l'axe des premiers pneumatiques 5. Les portions latérales 27 présentent un profil rectiligne, incliné par rapport à la direction radiale, de telle sorte que ces portions latérales 27 se rapprochent l'une de l'autre radialement vers l'extérieur.

La portion intérieure 29 des secondes enveloppes 17 est très légèrement concave. Cette portion intérieure 29 repose sur un second siège constitué des seconds demi-sièges 71 de deux flasques 55 adjacents. En profil, les portions latérales 33 et la portion extérieure 31 se raccordent mutuellement sans discontinuité, avec une courbure de signe constant. Les seconds pneumatiques 11 présentent un profil en forme générale de champignon.

Les premiers talons 35 logent chacun un élément d'armature, ici sous la forme d'un jonc 72 par exemple métallique. Cet élément est logé ici au niveau du col 41 des premiers talons 35. Les seconds pneumatiques 11 sont eux dépourvus d'armature, du moins rigide, ce qui leur confère une très grande souplesse.

Le rouleau 1 comprend en outre une paire de flasques d'extrémité 74 qui se montent à chaque bout du support tubulaire 3. Les flasques d'extrémité 74 portent ici un moyeu 76 par l'intermédiaire duquel le rouleau 1 est monté à rotation sur une machine agricole. Chaque flasque d'extrémité 74 présente au voisinage de sa périphérie une portion en couronne en correspondance de forme avec les grandes faces des flasques 55. Ici, cette portion porte une portion en saillie analogue à la portion en saillie 61 des flasques 55, une portion en retrait analogue à la portion en retrait 63 de ces flasques et une surface formant un demi-siège analogue aux demi-sièges 69 des flasques 55. Ceci permet de maintenir les premiers pneumatiques 5 qui se trouvent au voisinage des extrémités du support 3 entre un flasque 55 et un flasque d'extrémité 74.

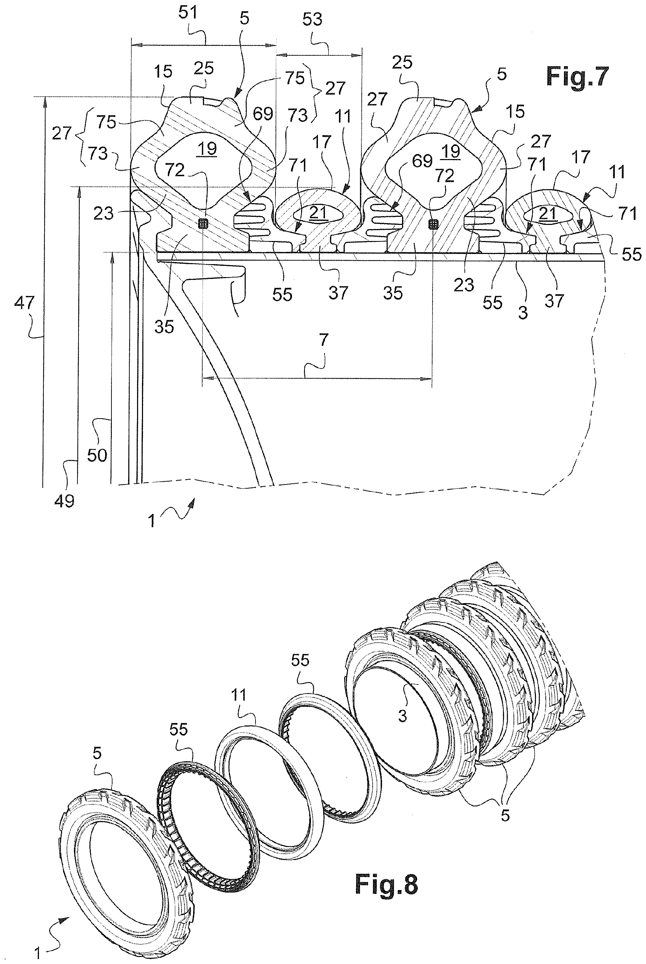

On fait référence aux figures 7 et 8.

Une variante du rouleau 1 se distingue de celle décrite en relation avec les figures 1 à 6 d'abord par le profil des premiers pneumatiques 5.

La portion intérieure 23 des premières enveloppes 15 est convexe. Cette portion intérieure 23 s'étend axialement et radialement au-delà des premiers demi-sièges 69. Cette portion intérieure 23 se raccorde aux portions latérales 27 par une portion au profil arrondi franc 73. Cet arrondi 73 forme une zone d'inflexion entre les portions latérales 27 et la portion intérieure 23. Cette zone d'inflexion permet aux premiers pneumatiques 5 de s'affaisser radialement lorsqu'ils sont sollicités radialement vers l'intérieur, notamment en travail, en comprimant les premières chambres 19. La portion extérieure 25 est plus étroite que la portion intérieure 23. La portion extérieure 25 se raccorde aux portions latérales 27 par une portion au profil de congé 75.

La ligne II du tableau A rassemble un jeu de dimensions à usage par exemple pour la réalisation d'un rouleau 1 conforme aux figures 7 et 8.

La ligne II du tableau A et la ligne correspondante du tableau B font apparaître que le pas P des premiers pneumatiques 5 est sensiblement inférieur à la somme de la largeur W1 des premières enveloppes 15 et de celle W2 des secondes enveloppes 17, malgré l'intercalation de deux flasques 55 entre deux premiers pneumatiques 5 voisins l'un de l'autre. Cela résulte du fait que la portion inférieure 23 des premières enveloppes 15 dépasse les premiers demi-sièges 69, axialement et radialement vers l'extérieur, au-delà d'une extrémité axiale des secondes enveloppes 17. Les secondes enveloppes 17 se trouvent partiellement logées radialement sous la première portion 23 des premières enveloppes 15.

Le diamètre extérieur 49 des seconds pneumatiques 11 reste inférieur au plus grand diamètre de la portion inférieure 23 des premières enveloppes 15.

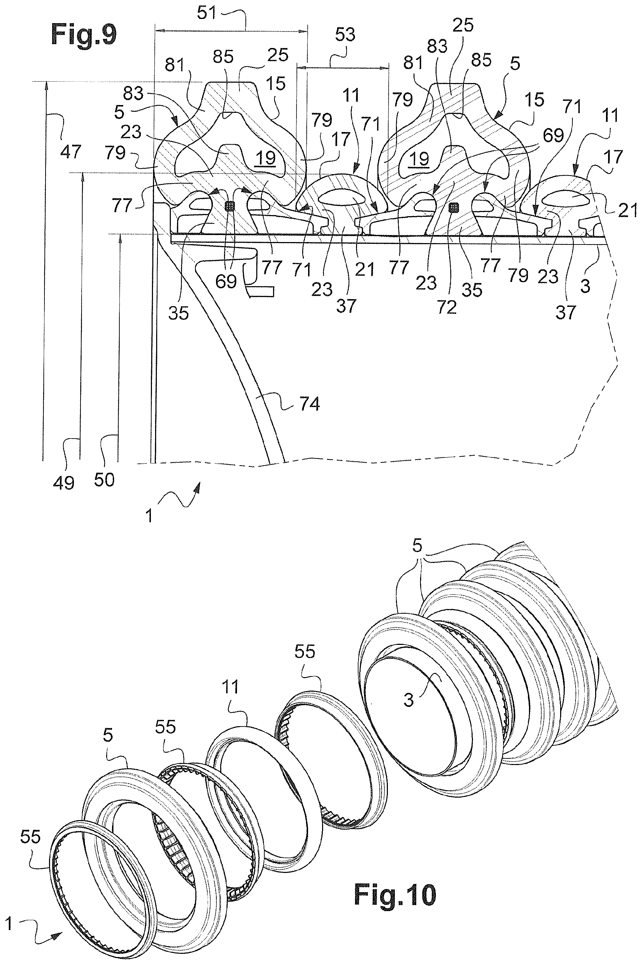

On fait référence aux figures 9 et 10.

Une autre variante du rouleau 1 des figures 1 à 6 s'en distingue notamment par le profil des premiers pneumatiques 5, celui des seconds pneumatiques 11 et l'agencement des flasques 55.

La portion intérieure 23 des premières enveloppes 15 est maintenant généralement concave. Cette portion intérieure 23 présente un profil généralement bombé radialement vers l'extérieur. Ici, ce profil est sensiblement semi-circulaire. La paroi intérieure 23 présente un profil qui s'étend de part et d'autre d'un premier talon 35 en deux sections 77, chacune d'allure en demi-cercle, dans la direction radiale.

Les premiers talons 35 présentent ici un profil en forme générale de trapèze régulier. L'embase 39 et le col 41 se raccordent l'une à l'autre sans discontinuité dans le profil des premiers talons 35.

Les portions latérales 27 présentent chacune une portion profilée en arc de cercle 79 qui se raccorde, vers l'intérieur, à la portion intérieure 23 de la première enveloppe 15, et, vers l'extérieur, à une portion profilée en un arc de courbure inverse 81 par l'intermédiaire de laquelle les portions latérales 27 se raccordent à la portion extérieure 25 de la première enveloppe 15.

Ce profil généralement en forme de "S", constitué des portions 79 et 81, forme une zone d'inflexion qui tend à faire s'affaisser la portion extérieure 25 en cas de sollicitation radiale dirigée vers l'intérieur, en comprimant la première chambre 19.

La portion extérieure 25 est étroite. Cette portion extérieure 25 est sensiblement de même largeur que l'embase 39 du premier talon 35.

Les premiers pneumatiques 5 présentent ici en outre chacun une portion de butée 83 qui fait saillie radialement vers l'extérieur depuis la portion inférieure 23 de la première enveloppe 15, à l'intérieur de la première chambre 19. Cette butée 83 est apte à coopérer avec une rainure circulaire 85 ménagée dans la portion extérieure 25 de la première l'enveloppe 15 et ouverte sur la première chambre 19. Cette butée 83 limite l'affaissement de la portion extérieure 25 dans la direction radiale.

Chaque premier demi-siège 69 est formé d'une surface dont le profil est en arc de cercle. La courbure de cette portion correspond à celle des sections 77 de la portion intérieure 23 des premières enveloppes 15. Les seconds demi-sièges 71 sont conformés chacun en une surface généralement tronconique d'axe 9, qui se rétrécie axialement vers l'extérieur.

Les secondes enveloppes 17 sont analogues à celles des figures précédentes, à l'exception que leur portion intérieure 29 est conformée en deux portions tronconiques, s'évasant radialement vers l'extérieur, et qui se raccordent chacune au second talon 37 d'une part et aux portions latérales 33 d'autre part.

La ligne III du tableau A rassemble un jeu de dimensions à usage par exemple pour la réalisation d'un rouleau 1 conforme aux figures 9 et 10.

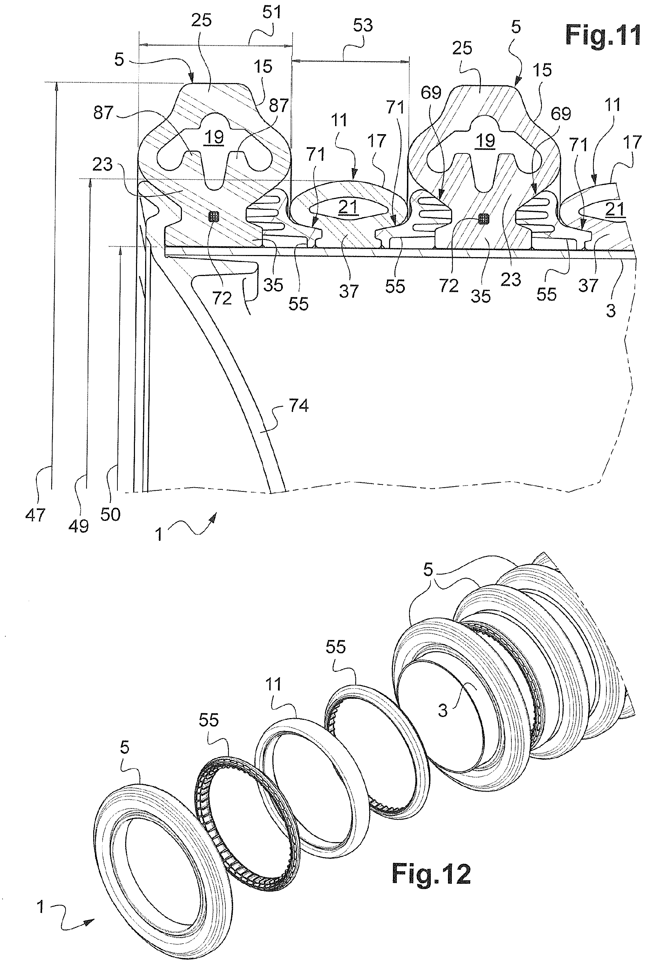

On fait référence aux figures 11 et 12.

Une autre variante encore du rouleau 1 se distingue de celle décrite en relation avec les figures 7 et 8 en ce que les premiers pneumatiques 5 présentent chacun une paire de portions en butées 87 qui font saillie de la portion intérieure 23 des premières enveloppes 15, dans la première chambre 19, radialement vers l'extérieur. Cette paire de portions de butée 87 coopère avec une paire de portions cylindriques, radialement opposées, pour limiter l'affaissement de la portion extérieure 25 lorsque les premiers pneumatiques 5 sont sollicités radialement vers l'intérieur.

La ligne IV du tableau A rassemble un jeu de dimensions à usage par exemple pour la réalisation d'un rouleau 1 conforme aux figures 11 et 12.

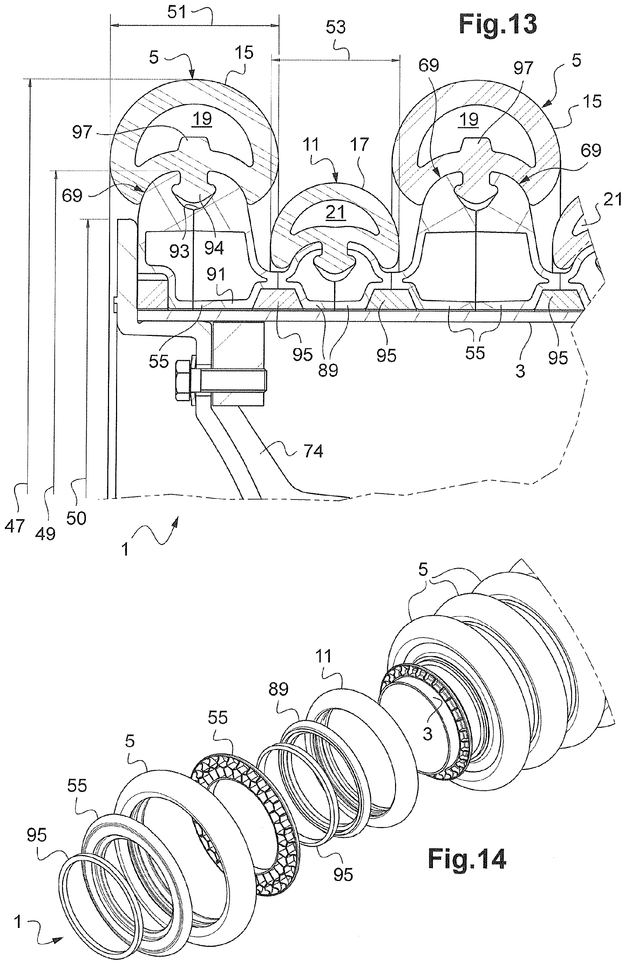

On fait référence aux figures 13 et 14.

Toujours une autre variante du rouleau 1 des figures 1 à 6 s'en distingue d'abord en ce qu'il comprend en outre une pluralité de flasques d'un second type, ou seconds flasques 89, analogues les uns aux autres. Les seconds flasques 89 sont enfilés autour du support tubulaire 3 de manière alignée les uns avec les autres. Les seconds flasques 89 sont alignés selon la direction longitudinale du support 3. Les seconds flasques 89 sont répartis sur la longueur du support 3, de manière intercalée entre les premiers flasques 55.

Les seconds flasques 89 sont organisés par paires. Une paire de seconds flasques 89 est à chaque fois intercalée entre deux paires voisines de premiers flasques 55.

À la différence du rouleau 1 des figures 1 à 6 notamment, les premiers pneumatiques 5 et les seconds pneumatiques 11 sont ici montés chacun sur le support 3 par l'intermédiaire respectivement d'une paire de premiers flasques 55 et d'une paire de seconds flasques 89. Les premiers pneumatiques 5 sont montés chacun sur une paire de premiers flasques 55, qui s'intercalent entre le premier talon 35 et le support 3. Les seconds pneumatiques 7 sont montés chacun sur une paire de seconds flasques 89, qui s'intercalent entre le second talon 37 et le support 3.

Chaque paire de premiers flasques 55 est constituée de deux premiers flasques 55 montés sur le support 3 de manière mutuellement adjacente. Chaque paire de premiers flasques 55 présente une portion périphérique intérieure qui forme une embase 91 par l'intermédiaire de laquelle la paire est en contact avec le support 3. Une portion périphérique extérieure de chacune de ces paires forme un siège pour la portion intérieure 23 des premières enveloppes, par réunion des demi-sièges 69. Cette portion périphérique des paires de premiers flasques 55 est bombée. Elle présente un sommet qui est interrompu pour définir une fente périphérique 93. Cette fente périphérique 93 reçoit les premiers talons 35 des premiers pneumatiques 5. Par coopération de forme, cette fente périphérique 93 maintient les premiers pneumatiques 5 sur le support 3. Pour ce faire, les premiers talon 35 présentent à la place de l'embase 39 une tête élargie 94, ici en forme de champignon, qui se rattache au col 41. Cette tête 94 est propre à être reçue dans la fente 93.

Les seconds flasques 89 sont conformés vis-à-vis des seconds pneumatiques 11 de manière homologue des premiers flasques 55 vis-à-vis des premiers pneumatiques 5. Les seconds flasques 89 sont plus petits que les premiers flasques 55. Les seconds flasques 89 présentent un diamètre extérieur sensiblement inférieur au diamètre extérieur des premiers flasques 55. Les seconds flasques 89 sont en outre plus étroits que les premiers flasques 55. Les seconds flasques 89 présentent une largeur, prise selon la direction axiale, qui est sensiblement inférieure à la largeur des premiers flasques 55. Ici, des anneaux 95 en matériau souple sont intercalés entre les premiers flasques 55 et le support 3 d'une part, et, d'autre part, entre les seconds flasques 89 et le support 3, à chaque jonction entre un premier flasques 55 et un second flasque 89.

La première enveloppe 15 présente une portion intérieure 23 généralement concave, ici en arc de cercle. La face interne de cette portion intérieure 23 présente une forme qui correspond à la réunion de deux premiers demi-sièges 69, ici sensiblement en arc de cercle. Les portions latérales 27 et la portion extérieure 25 des enveloppes se raccordent les unes à l'autre sans discontinuité dans la courbure, conférant un profil généralement en arc de cercle à ces portions. Une portion de butée 97 fait saillie dans la première chambre 19, radialement vers l'extérieure, depuis la portion intérieure 23, en zone médiane.

Les secondes enveloppes 17 présentent une forme homologue des premières enveloppes 15, dans des proportions réduites. Les secondes enveloppes 17 sont dépourvues de butée interne. En variante, les secondes enveloppes 17 présentent au moins une butée interne.

Ce mode de réalisation du rouleau 1 où les secondes enveloppes 17 sont homologues des premières enveloppes 15 peut être utilisé lorsqu'il s'agit de conférer aux seconds pneumatiques 11 une fonction agronomique, en plus ou en remplacement de leur fonction de nettoyage. Il peut s'agir par exemple de rappuyer le sol à des profondeurs différentes, dans les sillons d'une part et entre ces sillons d'autre part. Le décalage de profondeur correspond à la différence de rayon (OD1-OD2)/2 et peut atteindre jusqu'à 200 millimètres. Pour augmenter cette différence de rayon, on préfèrera augmenter la hauteur (OD1-ID)/2 des premiers pneumatiques 5, plutôt que d'augmenter le diamètre ID de ceux-ci, et ce afin d'éviter d'accroître la hauteur des embases 91.

La ligne V du tableau A rassemble un jeu de dimensions à usage par exemple pour la réalisation d'un rouleau 1 conforme aux figures 13 et 14.

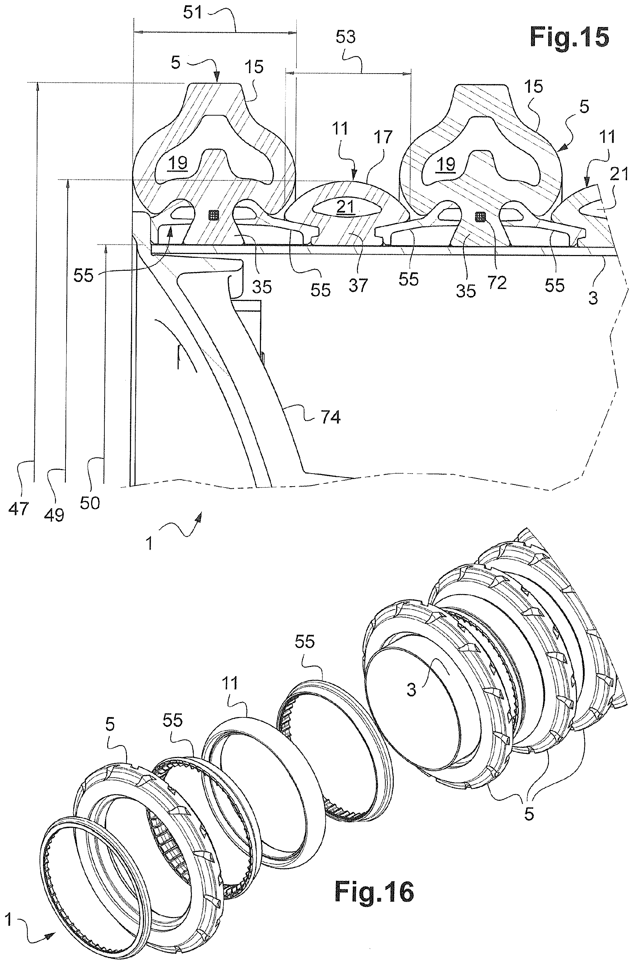

On fait référence aux figures 15 et 16.

Une variante du rouleau 1 des figures 9 à 10 s'en distingue essentiellement par les dimensions des premiers pneumatiques 5 et des seconds pneumatiques 11 ainsi que du pas 7.

La ligne V du tableau A rassemble un jeu de dimensions à usage par exemple pour la réalisation d'un rouleau 1 conforme aux figures 13 et 14.

Les variantes de réalisation du rouleau décrites plus haut en relation avec les figures 1 à 16 concernent un rouleau dit sillonneur. Un rouleau 1 de type sillonneur est équipé de premiers pneumatiques 5 de type sillonneurs, c'est-à-dire à usage pour former des sillons dans le sol. Les pneumatiques sillonneurs laissent des empreintes de sillons clairement marquées dans le sol et tassent en profondeur ces sillons.

Les pneumatiques sillonneurs sont généralement assez étroits, la largeur W1 de leur première enveloppe 15 est voisine ou inférieure à 100 millimètres et cette première enveloppe 15 présente une allure de crête.

Les pneumatiques sillonneurs peuvent être assemblés selon des pas P qui correspondent aux autres outils montés sur la machine, par exemple des pas P de 125, 150, 143 ou encore 167 millimètres.

L'invention n'est pas limitée aux rouleaux 1 de type sillonneur. Les figures suivantes montrent des variantes de réalisation du rouleau 1 destinées à rappuyer le sol après semis pas exemple.

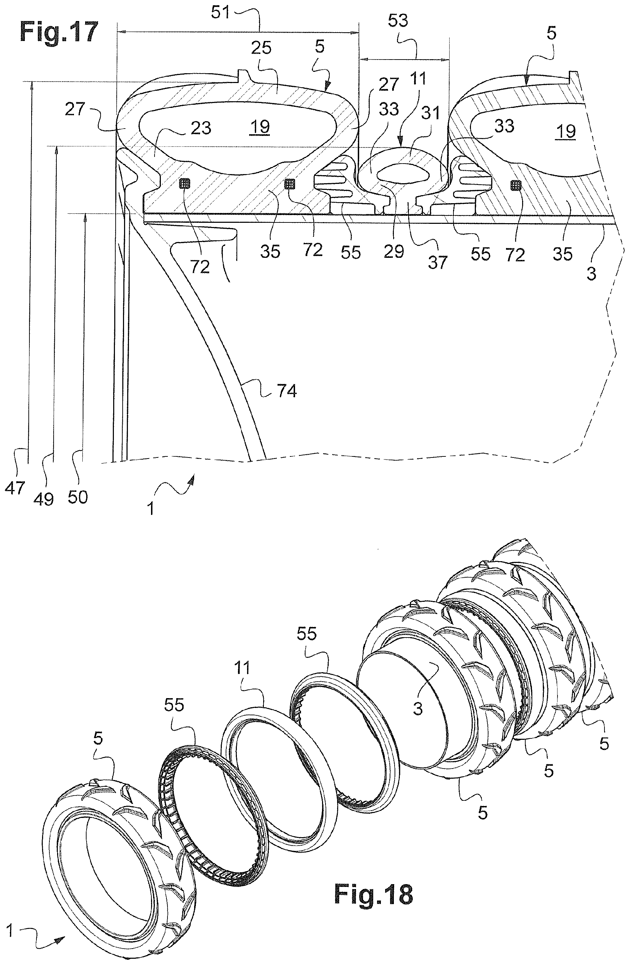

On fait référence aux figures 17 et 18.

Une variante du rouleau 1 des figures 1 à 6 s'en distingue essentiellement par la forme des premiers pneumatiques 5. Ces premiers pneumatiques 5 peuvent par exemple être utilisés pour rappuyer le sol.

La première enveloppe 15 est sensiblement plus large que dans les réalisations précédentes. L'embase 39 et le col 41 des premiers talons 35 également. Le col 41 loge maintenant deux éléments d'armature, sous la forme de deux jonc 72. La portion extérieure 25 est à peine bombée. Cette portion 25 présente un profil presque plat qui lui fait laisser dans le sol des sillons rappuyés. Les portions latérales 27 présentent un profil généralement coudé qui assure une transition entre la portion inférieure 23 et la portion extérieure 25. Ici, les premiers pneumatiques 5 sont dotés de crampons 99, lesquels restent optionnels.

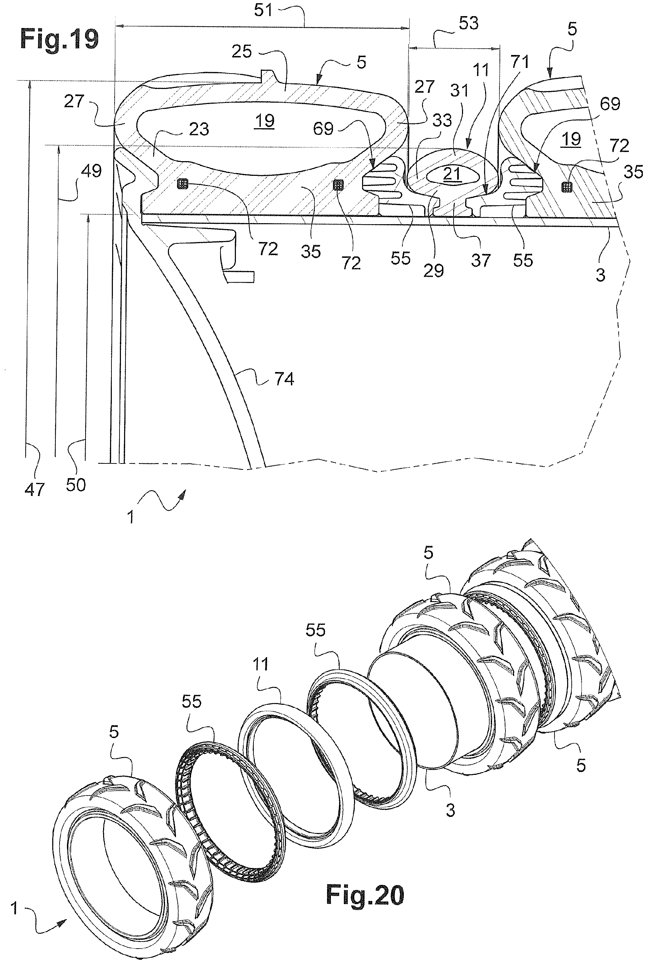

On fait référence aux figures 19 et 20 d'une part, et, d'autre part 21 et 22.

Des variantes du rouleau 1 des figures 17 et 18 s'en distinguent essentiellement par les dimensions des premiers pneumatiques 5 et des seconds pneumatiques 11. Des exemples de ces dimensions sont rassemblés aux lignes VIII et IX du tableau A.

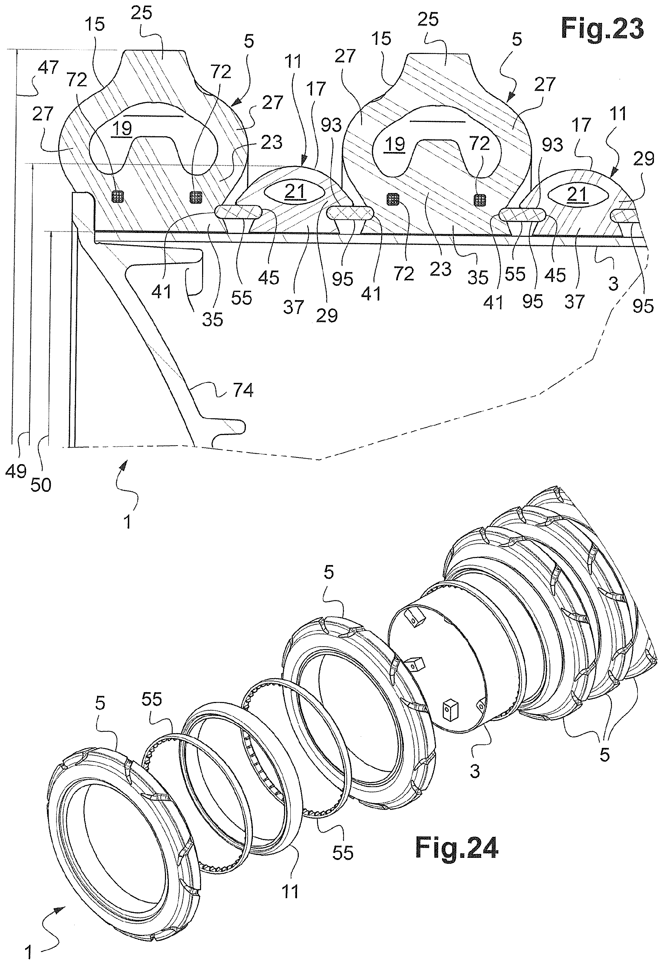

On fait référence aux figures 23 et 24.

Une autre variante du rouleau 1 des figures 9 et 10 s'en distingue notamment par le profil des premiers pneumatiques 5, celui des seconds pneumatiques 11 et l'agencement des flasques 55.

Les flasques 55 sont annulaires et présentent un profil généralement rectangulaire. Chaque flasque présente une surface périphérique extérieure 93 et une surface périphérique intérieure 95 toutes deux généralement cylindriques. La surface périphérique intérieure porte une pluralité de nervures, répartis sur cette surface, et qui font saillie radialement vers l'intérieur du flasque 55. Chaque flasque 55 repose sur le support 3 par l'intermédiaire de ces nervures. La surface périphérique intérieure et la surface périphérique extérieure sont reliées d'un à l'autre par une paire de surfaces annulaires à profil courbé, ici en forme de demi-cercle. Ces surfaces annulaires forment des bords latéraux des flasques 55.

Le col 41 des premiers talons 35 et le col 45 des seconds talons 37 sont agencés sous la forme d'une gorge circulaire ouverte axialement sur l'extérieur des premiers pneumatiques 5 et des seconds pneumatiques 11, respectivement. Le profil de ces gorges correspond à la forme des bords latéraux des flasques 55, ce qui permet aux premiers pneumatiques 5 et aux seconds pneumatiques 11 de s'engager axialement avec les flasques 55, de part et d'autre de ces flasques 55.

La portion intérieure 23 des premières enveloppes 15 est maintenant généralement rectiligne en profil. La portion intérieure 29 des secondes enveloppes 19 est également généralement rectiligne en profil. Cette portion intérieure 29 repose sur la surface périphérique extérieure de deux flasques 55 mutuellement voisins, laquelle surface agit à chaque fois à la manière d'un demi-siège, comme dans le mode de réalisation des figures 9 et 10.

La ligne X du tableau A rassemble un jeu de dimensions à usage par exemple pour la réalisation d'un rouleau 1 conforme aux figures 23 et 24.

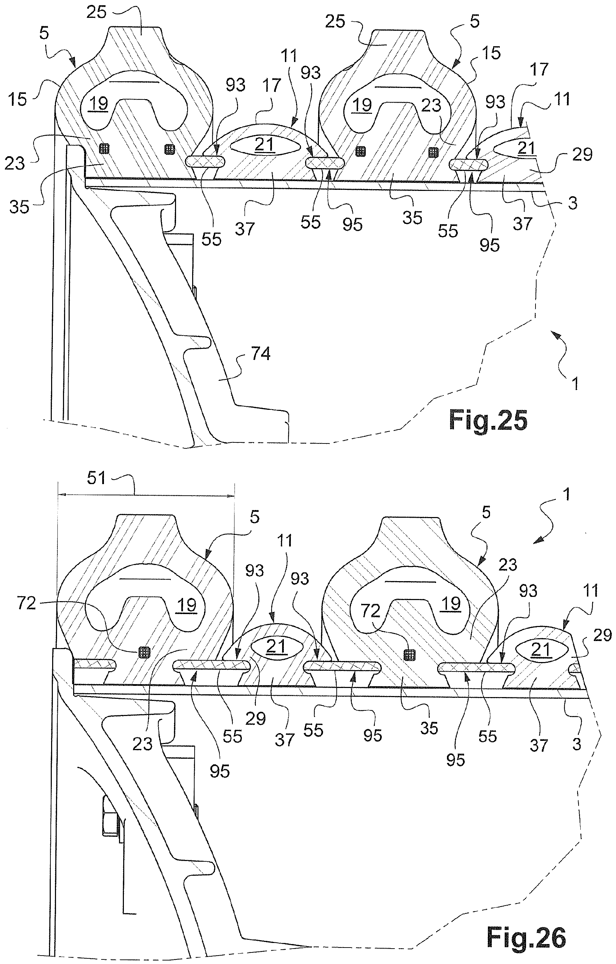

On fait référence à la figure 25.

Elle montre une variante de réalisation du rouleau 1 qui se distingue de celle des figures 23 et 24 uniquement par les dimensions des seconds pneumatiques 11, ici la largeur W2 de ceux-ci.

La ligne XI du tableau A rassemble un jeu de dimensions à usage par exemple pour la réalisation d'un rouleau 1 conforme à la figure 25.

La comparaison des lignes X et XI de ce tableau, et celle des figures, montrent que la largeur des seconds pneumatiques 11 peut être adaptées de manière à régler le pas P des premiers pneumatiques 5. Il existe une différence de pas P entre ces deux variantes de réalisation qui s'élève à 17 millimètres. Et cette différence de pas P résulte intégralement d'une augmentation de 17 millimètres de la largeur W2 des seconds pneumatiques 11. Ni la forme, ni les dimensions des flasques ne sont modifiées, alors même que ces flasques 55 jouent un rôle d'entretoise.

Autrement dit, plutôt que de régler le pas P entre premiers pneumatiques 5 par l'intermédiaire d'entretoises, on règle ici ce pas P par l'intermédiaire des seconds pneumatiques 11, en particulier la largeur W2 de ceux-ci.

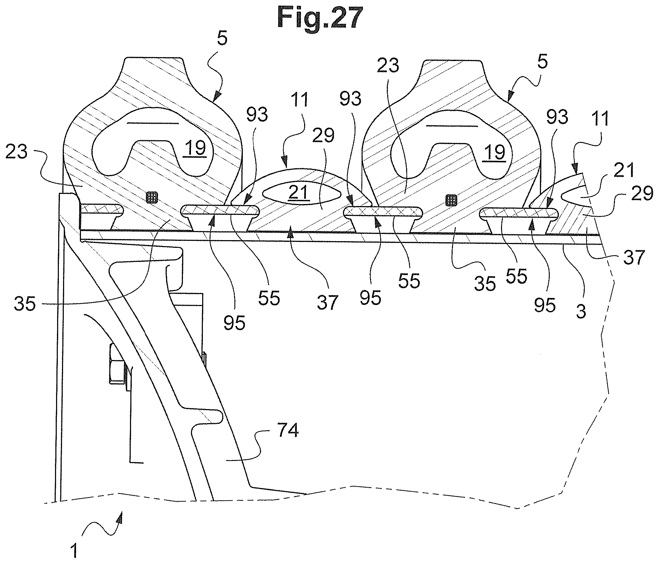

On fait référence aux figures 26 et 27.

Elles montrent respectivement des variantes de réalisation du rouleau 1 des figures 24 et 25.

Là, la portion inférieure 23 de l'enveloppe 15 des premiers pneumatiques 5 est modifiée de manière à rétrécir le col 41 et conférer à cette portion inférieure 23 une surface à profil généralement rectiligne capable de s'appuyer sur la surface périphérique extérieure des flasques 55. Cette surface des flasques 55 joue le rôle de siège à la fois pour les premiers pneumatiques 5 et les seconds pneumatiques 11. En conséquence, les flasques 55 sont agrandis en largeur.

Les lignes XII et XIII du tableau A rassemblent un jeu de dimensions à usage par exemple pour la réalisation d'un rouleau 1 conforme aux figures 26 et 27.

Ces lignes montrent que l'augmentation de largeur des flasques 55 s'est faite sans modification du pas P des premiers pneumatiques 5, de la largeur W1 de ces premiers pneumatiques 5 ou de la largeur W2 des seconds pneumatiques 11.

Les tableaux A et B ci-dessous rassemblent des exemples de dimensions pour la réalisation de rouleaux conformes aux figures décrites précédemment.

**Tableau A :**

| | ID mm | P mm | OD1 mm | W1 mm | OD2 mm | W2 mm |
|---|---|---|---|---|---|---|
| I | 406 | 150 | 660 | 85 | 490 | 56 |
| II | 406 | 150 | 610 | 95 | 490 | 56 |
| III | 406 | 150 | 610 | 102 | 488 | 61.4 |
| IV | 406 | 167 | 610 | 95 | 490 | 73 |
| V | 324 | 167 | 600 | 100 | 476 | 76 |
| VI | 406 | 167 | 610 | 102 | 488 | 78.5 |
| VII | 406 | 205 | 570 | 150 | 490 | 56 |
| VIII | 406 | 235 | 570 | 180 | 490 | 56 |
| IX | 406 | 255 | 570 | 200 | 490 | 56 |
| X | 406 | 150 | 600 | 100 | 478 | 62 |
| XI | 406 | 167 | 600 | 100 | 478 | 79 |
| XII | 406 | 150 | 600 | 100 | 478 | 62 |
| XIII | 406 | 167 | 600 | 100 | 478 | 79 |

**Tableau B :**

| | (OD1-ID)/2 mm | (OD2-ID)/2 mm | (OD1-OD2)/2 mm | W1+W2 mm | W2/W1 % | OD2/OD1 % |
|---|---|---|---|---|---|---|
| I | 127 | 42 | 85 | 141 | 66 | 74 |
| II | 102 | 42 | 60 | 151 | 59 | 80 |
| III | 102 | 41 | 61 | 163.4 | 60 | 80 |
| IV | 102 | 42 | 60 | 168 | 77 | 80 |
| V | 138 | 76 | 62 | 176 | 76 | 80 |
| VI | 102 | 41 | 61 | 180.5 | 77 | 80 |
| VII | 82 | 42 | 40 | 206 | 37 | 86 |
| VIII | 82 | 42 | 40 | 236 | 31 | 86 |
| IX | 82 | 42 | 40 | 256 | 28 | 86 |
| X | 97 | 36 | 61 | 162 | 62 | 80 |
| XI | 97 | 36 | 61 | 179 | 79 | 80 |
| XII | 97 | 36 | 61 | 162 | 62 | 80 |
| XIII | 97 | 36 | 61 | 179 | 79 | 80 |

Les tableaux A et B montrent un diamètre OD2 généralement compris dans une plage qui va de 60 à 90 pour cent du diamètre OD1. Cela doit toutefois être mis en rapport avec la fonction agricole des premiers pneumatiques 5.

Lorsque les premiers pneumatiques 5 agissent comme sillonneurs, comme c'est le cas pour les réalisations des lignes I à VI par exemple, le rapport du diamètre OD2 sur le diamètre OD1 est plutôt petit du fait qu'une partie importante des premiers pneumatiques 5 doit pouvoir pénétrer le sol avant d'atteindre un ratio de compression maximum sur les seconds pneumatiques 11.

Le rapport en question est plutôt grand dans le cas de premiers pneumatiques 5 qui travaillent essentiellement par l'intermédiaire de leur portion extérieure 25, comme c'est le cas pour les réalisations des lignes VII à XIII (cas, par exemple, de premiers pneumatiques 5 destinés à rappuyer le sol).

La différence de rayon entre les premiers pneumatiques 5 et les seconds pneumatiques 11 est représentée par la grandeur (OD2-OD1)/2. Cette différence de rayon correspond sensiblement à la profondeur de l'empreinte que laissent les premiers pneumatiques 5 à l'usage. Cette différence de rayon correspond par exemple à la profondeur d'un sillon dans le cas d'un rouleau de type sillonneur. Dans les exemples de réalisation des tableaux A et B, cette différence est comprise entre 40 et 85 millimètres. Plus généralement, cette différence est comprise entre 30 et 150 millimètres environ. Et la valeur de cette différence est pratiquement indépendante du diamètre du support 3 et du pas P.

Une comparaison des lignes I et II aux lignes VII à IX montre que de seconds pneumatiques 11 de forme et de dimensions analogues peuvent être employés en combinaison de premiers pneumatiques 5 de forme et de fonction variées.

Les lignes du tableau A montrent que la somme de la largeur W1 des premiers pneumatiques 5 et de la largeur W2 des seconds pneumatiques 11 est voisine du pas P, le plus souvent par valeurs inférieures. Ceci afin d'éviter que des zones du rouleau 1 ne soient ni nettoyées par la déformation des premiers pneumatiques 5 ni par celle des seconds pneumatiques 11. On pourra veiller à ce que la somme (W1 + W2) soit au moins égale au pas P à 15 pour cent près, de préférence à 10 pour cent et encore plus préférentiellement à 8 pour cent près.

Dans le cas où la somme de la largeur W1 et de la largeur W2 est inférieure au pas P (ligne I), on veillera à ce que cette somme soit inférieure à 1,15 fois le pas P, de préférence inférieure à 1,10 fois P et encore plus préférentiellement inférieure à 1,7 fois P. Dans ce cas en effet, la différence entre le pas P et la somme des largeurs W1 et W2 correspond à une zone non nettoyée du rouleau, qu'il convient de minimiser. Comme la largeur W1 des premiers pneumatiques 5 et le pas P de ceux-ci sont généralement dictés par des considérations agronomiques, c'est la largeur W2 des seconds pneumatiques 11 qui sera adaptée afin que soient vérifiées les relations dimensionnelles entre la somme des largeurs W1 et W2 et le pas P.

Dans le cas où la somme de la largeur W1 et de la largeur W2 est supérieure au pas P (lignes II à XIII), il n'existe pas de zone non nettoyée du rouleau 1. Il n'y a pas lieu, dans ce cas, de respecter une limite sur la somme (W1 + W2) qui soit en rapport avec le pas P, du moins, pour ce qui concerne le nettoyage du rouleau 1. Les lignes II à XIII du tableau A font cependant apparaître un ordre de grandeur de ce que l'on peut appeler une valeur d'interférence, ou de recouvrement, des premiers pneumatiques 5 et des seconds pneumatiques 11, représentée par la différence (P - (W1 + W2)). Ce recouvrement s'y trouve généralement compris entre 0,5 et 9 pour cent du pas P, sans que cela soit absolument nécessaire à la réalisation de l'invention.

Une comparaison des lignes II et IV, et surtout des lignes VII à IX, qui font apparaître une augmentation sensible du pas P correspondant exactement à une augmentation de la largeur W1, montre que la largeur W2 peut être déterminée de manière à combler l'écart entre le pas P et la largeur W1, qui sont des dimensions directement reliées au travail du sol.

Une comparaison des lignes X et XI, ou des lignes XII et XIII, montrent que la largeur W2 des seconds pneumatiques 11 peut être adaptée de manière à régler une valeur de pas P en conservant de premiers pneumatiques 5 identiques.

À partir des portions latérales 27 des premières enveloppes 15, et surtout au niveau de leur portions inférieure 23, se crée entre deux premiers pneumatiques 5 voisins une zone étroite, dont le profil se rétrécie radialement vers l'extérieur. Du fait de sa forme, cette zone est propice à l'accumulation de terre. Pour la même raison, cette zone est difficile à nettoyer. C'est pourquoi il est avantageux d'y prévoir des pneumatiques du type des seconds pneumatiques 11 décrits plus haut. Et il est encore plus avantageux que leur diamètre OD2 soit inférieur au diamètre maximum de la portion intérieure 23 des premiers pneumatiques 5.

En travail, les premiers pneumatiques 5 se déforment sans contacter les seconds pneumatiques 11, en particulier du fait que les premiers pneumatiques 5 et les seconds pneumatiques 11 sont maintenus dans des sièges respectifs. Ces sièges contiennent l'essentiel la déformation des pneumatiques selon une direction radiale. La bande de roulement des seconds pneumatiques 11 au niveau de la portion intérieure 23 ou du moins de la partie de cette dernière maintenue dans un siège.

Il est important qu'au maximum de la compression des premiers pneumatiques 5, les seconds pneumatiques 11 se trouvent sous la portion extérieure 25 des premières enveloppes 15. Pour garantir cela, on peut prévoir des butées dans les premières chambres 19 afin de limiter la compression des premiers pneumatiques 5.

En travail, les seconds pneumatiques 11 peuvent contacter le sol, en particulier lorsque celui-ci est assez meuble. Dans ce cas, ces seconds pneumatiques 11 forment une butée à l'enfoncement des premiers pneumatiques 5, à la manière d'une jauge de profondeur. Leur hauteur est prise en considération pour qu'ils participent ainsi au réglage de la profondeur de travail des premiers pneumatiques 5. Il en est de même lorsqu'on souhaite utiliser les seconds pneumatiques 11 afin de rappuyer le sol sur l'entre-rang, par exemple pour en faire remonter de l'eau.

La forme des talons des seconds pneumatiques 11 permet d'assurer une étanchéité vis-à-vis de la terre entre le bandage et le support 3.

L'invention n'est pas limitée aux modes de réalisation décrits plus haut, à titre d'exemple uniquement. En particulier :
On peut ainsi envisager toute combinaison de forme entre les premiers pneumatiques 5 et les seconds pneumatiques 11.

Les seconds pneumatiques 11 ne sont pas nécessairement de type semi-creux. Plus généralement, les seconds pneumatiques 11 peuvent prendre la forme de bandages de types différents, notamment creux comme ici (pneumatiques semi-creux) ou pleins. Les pneumatiques 11 peuvent notamment être remplacés par des bandages pleins. Dans ce cas, on peut agencer les seconds bandages de manière qu'ils soient souples, typiquement en choisissant un matériau approprié, ou même rigide. Dans ce dernier cas en particulier, on pourra utiliser un matériau à faible coefficient de frottement (ultraglissant) pour la réalisation des seconds bandages afin de conserver leur conserver un caractère auto-nettoyant. Le nettoyage des seconds pneumatiques 11 peut résulter en effet, pour l'essentiel du moins, d'un effet glissant du matériau qui les constitue. Les seconds pneumatiques 11 ne sont pas nécessairement déformables, du moins pas dans une mesure comparable à la déformation des premiers pneumatiques 5.

On a décrit des premiers pneumatiques 5 dont les flancs sont bombés vers l'extérieur ou convexes. La forme bombée de ces flancs confère des propriétés de déformation aux pneumatiques 11 qui en améliorent les capacités de nettoyage. Un effet similaire peut être obtenu avec des premiers pneumatiques 5 dont les flancs sont bombés vers l'intérieur, ou concaves.

Des valeurs du pas P et du diamètre ID du support 3 ont été données ici à titre indicatif uniquement. L'invention s'applique de manière analogue à d'autres valeurs de ces grandeurs, par exemple à un pas P de 125 millimètres et à un diamètre ID de 168, 355 ou encore 610 millimètres.

Le diamètre extérieur OD2 des bandages 11 est compris entre 70 et 90 pour cent du diamètre OD1 des pneumatiques 5.

Une différence entre le rayon extérieur des pneumatiques 5 et le rayon extérieur des bandages 11 est comprise entre 30 et 200 millimètres, de préférence entre 30 et 150 millimètres.

## Revendications

1. Rouleau agricole (1) du type comprenant un support tubulaire (3) et une série de pneumatiques (5) montée sur le support (3), chaque pneumatique (5) de la série présentant une enveloppe respective (15) non gonflée, comprenant en outre une série de bandages (11), montée sur le support (3) de manière intercalée dans la série de pneumatiques (5), chaque bandage (11) présentant une enveloppe respective (17) déformable, **caractérisé en ce que** les bandages (11) sont plus petits que les pneumatiques (5) tandis que leur enveloppe (17) est plus étroite, le rouleau comprenant en outre au moins une série de flasques (55), organisés par paires, chaque paire de flasques (55) contribuant à maintenir un pneumatique (5) ou un bandage (11) sur le support tubulaire (3) et chaque paire de flasques (55) portant un siège (69, 71) que vient coiffer une partie au moins de l'enveloppe des pneumatiques (5) ou des bandages (11).

2. Rouleau selon la revendication 1, dans lequel la série de pneumatiques (5) est montée sur le support (3) selon un pas sensiblement constant (7), et ce pas est voisin de la somme des largeurs (W1, W2) des enveloppes (15, 17) des pneumatiques (5) et des bandages (11), en particulier égale à 15 pour cent près, plus préférentiellement à 10 pour cent près et encore plus préférentiellement à 8 pour cent près.

3. Rouleau selon l'une des revendications 1 et 2, dans lequel la série de pneumatiques (5) est montée sur le support (3) selon un pas sensiblement constant (7), et ce pas est inférieur à la somme des largeurs (W1, W2) des enveloppes (15, 17) des pneumatiques (5) et des bandages (11).

4. Rouleau selon l'une des revendications précédentes, dans lequel la largeur (W2) de l'enveloppe (17) des bandages (11) est inférieure à 80 pour cent de celle (W1) des pneumatiques (5).

5. Rouleau selon l'une des revendications précédentes, dans lequel le diamètre extérieur (OD2) des bandages (11) est compris entre 70 et 90 pour cent du diamètre (OD1) des pneumatiques (5).

6. Rouleau selon l'une des revendications précédentes, dans lequel les pneumatiques (5) ou les bandages (11) présentent un talon (35, 37) auquel leur enveloppe (15, 17) est attachée, et ces pneumatiques (5) et ces bandages (11) sont maintenus sur le support (3) par l'intermédiaire de ce talon (35, 37).

7. Rouleau selon la revendication 1, dans lequel chaque flasque (55) contribue à maintenir un pneumatique (5) et un bandage (11) sur le support tubulaire (3).

8. Rouleau selon la revendication 7, dans lequel chaque flasque (55) est conformé en une portion au moins de siège (69) pour l'enveloppe (15) d'un pneumatique (5) et une portion au moins de siège (71) pour l'enveloppe (17) d'un bandage (11).

9. Rouleau selon l'une des revendications 6 à 8, dans lequel le maintien des pneumatiques (5) et des bandages (11) se fait par coopération de forme entre les flasques (55) et une portion de chaque pneumatique (5) et de chaque bandage (11) en forme de talon.

10. Rouleau selon l'une des revendications 6 à 9, dans lequel le maintien du pneumatique (5) ou du bandage (11) laisse au moins une portion latérale (27, 33) des enveloppes libres de se déformer.

11. Rouleau selon l'une des revendications précédentes, dans lequel une différence entre le rayon extérieur des pneumatiques (5) et le rayon extérieur des bandages (11) est comprise entre 30 et 200 millimètres, de préférence entre 30 et 150 millimètres.

12. Rouleau selon l'une des revendications précédentes, dans lequel l'enveloppe respective (17) de certains au moins des bandages (11) est de type non gonflé.

13. Rouleau selon l'une des revendications précédentes, dans lequel l'enveloppe (17) des bandages (11) est dépourvue d'armature rigide.

## Patentansprüche

1. Landwirtschaftliche Walze (1) des Typs, der einen rohrförmigen Träger (3) und eine Reihe von Reifen (5) umfasst, die auf dem Träger (3) montiert sind, wobei jeder Reifen (5) der Reihe eine jeweilige nicht aufgeblasene Hülle (15) aufweist, weiter umfassend eine Reihe von Bandagen (11), die auf dem Träger (3) in einer mit der Reihe von Reifen (5) verschachtelten Weise montiert sind, wobei jede Bandage (11) eine jeweilige verformbare Hülle (17) aufweist, **dadurch gekennzeichnet, dass** die Bandagen (11) kleiner sind als die Reifen (5), während ihre Hülle (17) schmaler ist, wobei die Walze ferner mindestens eine Reihe von Flanschen (55) umfasst, die paarweise angeordnet sind, wobei jedes Paar von Flanschen (55) dazu beiträgt, einen Reifen (5) oder eine Bandage (11) auf dem rohrförmigen Träger (3) zu halten, und jedes Paar von Flanschen (55) einen Sitz (69, 71) trägt, der von mindestens einem Teil der Hülle der Reifen (5) oder der Bandagen (11) bedeckt wird.

2. Walze nach Anspruch 1, wobei die Reihe von Reifen (5) mit einem im Wesentlichen konstanten Abstand (7) auf dem Träger (3) montiert ist, und dieser Abstand nahe der Summe der Breiten (W1, W2) der Hüllen (15, 17) der Reifen (5) und der Bandagen (11) liegt, insbesondere auf 15 Prozent genau gleich ist, vorzugsweise auf 10 Prozent genau und noch bevorzugter auf 8 Prozent genau.

3. Walze nach einem der Ansprüche 1 und 2, wobei die Reihe von Reifen (5) mit einem im Wesentlichen konstanten Abstand (7) auf dem Träger (3) montiert ist und dieser Abstand kleiner ist als die Summe der Breiten (W1, W2) der Hüllen (15, 17) der Reifen (5) und der Bandagen (11).

4. Walze nach einem der vorhergehenden Ansprüche, wobei die Breite (W2) der Hülle (17) der Bandagen (11) weniger als 80 Prozent der Breite (W1) der Reifen (5) beträgt.

5. Walze nach einem der vorhergehenden Ansprüche, wobei der Außendurchmesser (OD2) der Bandagen (11) zwischen 70 und 90 Prozent des Durchmessers (OD1) der Reifen (5) beträgt.

6. Walze nach einem der vorhergehenden Ansprüche, wobei die Reifen (5) oder die Bandagen (11) einen Wulst (35, 37) aufweisen, an dem ihre Hülle (15, 17) befestigt ist, und diese Reifen (5) und Bandagen (11) über diesen Wulst (35, 37) auf dem Träger (3) gehalten werden.

7. Walze nach Anspruch 1, wobei jeder Flansch (55) dazu beiträgt, einen Reifen (5) und eine Bandage (11) auf dem rohrförmigen Träger (3) zu halten.

8. Walze nach Anspruch 7, wobei jeder Flansch (55) als mindestens einer Sitzabschnitt (69) für die Hülle (15) eines Reifens (5) und als mindestens einer Sitzabschnitt (71) für die Hülle (17) einer Bandage (11) ausgebildet ist.

9. Walze nach einem der Ansprüche 6 bis 8, wobei das Halten der Reifen (5) und Bandagen (11) durch Formschluss zwischen den Flanschen (55) und einem wulstförmigen Abschnitt jedes Reifens (5) und jeder Bandage (11) erfolgt.

10. Walze nach einem der Ansprüche 6 bis 9, wobei das Halten des Reifens (5) oder der Bandage (11) mindestens einen Seitenabschnitt (27, 33) der Hüllen frei lässt, um sich zu verformen.

11. Walze nach einem der vorhergehenden Ansprüche, wobei ein Unterschied zwischen dem Außenradius der Reifen (5) und dem Außenradius der Bandagen (11) zwischen 30 und 200 Millimetern, vorzugsweise zwischen 30 und 150 Millimetern liegt.

12. Walze nach einem der vorhergehenden Ansprüche, wobei die jeweilige Hülle (17) von mindestens einigen der Bandagen (11) vom nicht aufgeblasenen Typ ist.

13. Walze nach einem der vorhergehenden Ansprüche, wobei die Hülle (17) der Bandagen (11) keine starre Verstärkung aufweist.

## Claims

1. Agricultural roller (1) of the type comprising a tubular support (3) and a series of pneumatic tyres (5) mounted on the support (3), each pneumatic tyre (5) of the series having a respective uninflated envelope (15), further comprising a series of tyres (11), mounted on the support (3) and interleaved in the series of pneumatic tyres (5), each tyre (11) having a respective deformable envelope (17), **characterized in that** the tyres (11) are smaller than the pneumatic tyres (5) while their envelope (17) is narrower, the roller further comprising at least one series of flanges (55) organised in pairs, each pair of flanges (55) contributing to retaining a pneumatic tyre (5) or a tyre (11) on the tubular support (3) and each pair of flanges (55) carrying a seat (69, 71) that comes to cap at least a part of the envelope of the pneumatic tyres (5) or the tyres (11).

2. Roller according to Claim 1, in which the series of pneumatic tyres (5) is mounted on the support (3) at a substantially constant pitch (7) and said pitch is close to the sum of the widths (W1, W2) of the envelopes (15, 17) of the pneumatic tyres (5) and the tyres (11), in particular equal to within 15 per cent, preferably to within 10 per cent and more preferably to within 8 per cent.

3. Roller according to any one of Claims 1 and 2, in which the series of pneumatic tyres (5) is mounted on the support (3) at a substantially constant pitch (7), and said pitch is less than the sum of the width (W1, W2) of the envelopes (15, 17) of the pneumatic tyres (5) and the tyres (11).

4. Roller according to any one of the preceding claims, in which the width (W2) of the envelope (17) of the tyres (11) is 80 per cent less than that (W1) of the pneumatic tyres (5).

5. Roller according to any one of the preceding claims, in which the outside diameter (OD2) of the tyres (11) is between 70 and 90 per cent inclusive of the diameter (OD1) of the pneumatic tyres (5).

6. Roller according to any one of the preceding claims, in which the pneumatic tyres (5) or the tyres (11) have a heel (35, 37) to which their envelope (15, 17) is attached, and said pneumatic tyres (5, 11) and said tyres (11) are retained on the support (3) by means of said heel (35, 37).

7. Roller according to Claim 1, in which each flange (55) contributes to retaining a pneumatic tyre (5) and a tyre (11) on the tubular support (3).

8. Roller according to Claim 7, in which each flange (55) is shaped as at least a portion of a seat (69) for the envelope (15) of a pneumatic tyre (5) and at least a portion of a seat (71) for the envelope (17) of a tyre (11).

9. Roller according to any one of Claims 6 to 8, in which the pneumatic tyres (5) and the tyres (11) are retained by cooperation of shapes between the flanges (55) and a portion of each pneumatic tyre (5) and of each tyre (11) in the form of a heel.

10. Roller according to any one of Claims 6 to 9, in which the retention of the pneumatic tyre (5) or of the tyre (11) leaves at least a lateral portion (27, 33) of the envelopes free to be deformed.

11. Roller according to any one of the preceding claims, in which a difference between the outside radius of the pneumatic tyres (5) and the outside radius of the tyres (11) is between 30 and 200 millimetres, preferably between 30 and 150 millimetres.

12. Roller according to any one of the preceding claims, in which the respective envelope (17) of at least some of the tyres (11) is of uninflated type.

13. Roller according to any one of the preceding claims, in which the envelope (17) of the tyres (11) is deprived of rigid armature.
